# EUROPÄISCHE PATENTANMELDUNG

(11) **EP 0 834 520 A2**
(43) Veröffentlichungstag der Anmeldung: **08.04.1998**
(21) Anmeldenummer: 97116602.0
(22) Anmeldetag: 24.09.1997
(51) Int. Cl.: C08F 8/46, C08F 8/44

(54) **Wässrige Polyvinylacetal-Dispersionen**

(30) Priorität: 02.10.1996 DE 19640731
(71) Anmelder: Clariant GmbH, 65929 Frankfurt am Main (DE)
(72) Erfinder: Fischer, Hannes, Dr., 65232 Taunusstein (DE); Mag, Matthias, Dr., 61440 Oberursel (DE)

(57) **Zusammenfassung**

Wäßrige Dispersionen von Carboxylgruppen-haltigen Polyvinylacetalen, die keine Emulgatoren, keine leichtflüchtigen organischen Lösemittel und keine nichtflüchtigen Weichmacher enthalten, herstellbar durch a) Umsetzung von Hydroxylgruppen-haltigen Polyvinylacetalen mit Polycarbonsäureanhydriden in Schmelze oder in hochsiedenden Lösemitteln, b) zumindest Teilneutralisation der in den gebildeten modifizierten Polyvinylacetalen enthaltenen Carbonsäuregruppen und c) Dispergieren des erhaltenen Salzes der modifizierten Polyvinylacetale in Wasser, eignen sich als Beschichtungsmittel für Papier und Textilien sowie als Bindemittel für Farben und Lacke.

## Beschreibung

Die Erfindung betrifft die Herstellung von Dispersionen von Polyvinylacetalen in Wasser und deren Verwendung als Beschichtungsmittel.

Polyvinylbutyral ist als Beschichtungsmittel für Papier und Textilien sowie als Bindemittel für Lacke und Farben vorzüglich geeignet. Für diese Anwendungen wird das Polymere üblicherweise in organischen Flüssigkeiten, beispielsweise Alkoholen und aromatischen Kohlenwasserstoffen gelöst. Da seit längerer Zeit die Forderung besteht, Beschichtungssysteme zur Verfügung zu stellen, die keine organischen Lösungsmittel enthalten, hat es nicht an Versuchen gefehlt, wäßrige Lösungen oder Dispersionen von Polyvinylacetalen herzustellen.

Wasserlösliche Acetalgruppen enthaltende Polymere sind zwar in JP-A 05-295 016 und JP-A 07-126 567 beschrieben, es handelt sich bei diesen Produkten aber um Polyvinylalkohole mit geringem Acetalisierungsgrad. Sie sind somit nicht als Polyvinylacetale, sondern als modifizierte Polyvinylalkohole anzusehen.

Zur Dispergierung von Polyvinylacetalen in Wasser sind bisher im wesentlichen zwei Verfahrensweisen beschrieben. Im ersten Fall finden die Umsetzung eines Polyvinylalkohols mit einem Aldehyd, vorzugsweise Butyraldehyd, und die Dispergierung in einem Schritt statt (DE-A 27 52 054, DE-B 28 17 231). Nach der zweiten Methode werden Polyvinylacetale unter Scherung gegebenenfalls bei erhöhter Temperatur mit Wasser gemischt und dadurch in eine Dispersion überführt (GB-A 984 895, US-A 2 532 223, US-A 2 611 755). In beiden Verfahren ist der Zusatz von Emulgatoren zur Erzeugung stabiler Dispersionen erforderlich. DE-B 28 17 231 ist zu entnehmen, daß Emulgatoren die Wasserfestigkeit der aus den Dispersionen erzeugten Beschichtungen verschlechtern.

Polyvinylacetalen, die unter Scherung in Wasser dispergiert werden sollen, werden üblicherweise Weichmacher, beispielsweise Ricinolsäure- oder Phthalsäureester, zugesetzt, um die Ausbildung eines glatt verlaufenden Films bei der Trocknung zu erreichen. Die Weichmacher verbleiben in den Beschichtungen und bewirken eine Verringerung der Filmhärte.

Andererseits ist aus DE-A 15 69 536 bekannt, daß nicht plastifizierte Polyvinylbutyral-Dispersionen schlecht verlaufende, kreideartige Beschichtungen bilden. Es wurde auch vorgeschlagen, die Dispergierung von Polyvinylacetalen in Wasser durch Zusatz niedermolekularer Alkohole zu erleichtern, wobei ausdrücklich darauf hingewiesen wurde, daß diese Methode nur bei Polyvinylacetalen wirksam ist, die mindestens 6 Kohlenstoffatome in der Aldehydkomponente enthalten.

Es ist weiterhin bekannt, Polyvinylacetale durch chemische Veränderungen am zugrundeliegenden Polyvinylalkohol in Wasser dispergierbar zu machen. Beschrieben sind Copolymere, die Carboxylgruppen, beispielsweise in Form von Methacryl-, Itacon- oder Maleinsäureeinheiten (JP-A 58 191 701, JP-A 03-124 734) oder Sulfonatgruppen (EP-A 0 654 464, EP-A 0 594 026) enthalten. Diese Copolymere sind in der Regel schwieriger herzustellen als handelsübliche Polyvinylacetale.

Aufgabe der vorliegenden Erfindung war die Herstellung stabiler wäßriger Dispersionen von Polyvinylbutyralen, die ohne Zusätze von Emulgatoren und nichtflüchtigen Weichmachern Beschichtungen mit gutem Verlauf und guter Wasserbeständigkeit ergeben.

Diese Aufgabe wird dadurch gelöst, daß Polyvinylacetale in Schmelze oder in Lösung mit Polycarbonsäureanhydriden so umgesetzt werden, daß ein Teil der Carboxylgruppen nicht reagiert, anschließend die entstandene polymere Polycarbonsäure mit Basen neutralisiert wird und schließlich das gebildete polymere Salz durch Einrühren von Wasser in wäßrige Dispersion gebracht wird.

Gegenstand der Erfindung sind wäßrige Dispersionen von Carboxylgruppen-haltigen Polyvinylacetalen, die keine Emulgatoren, keine leichtflüchtigen organischen Lösemittel und keine nichtflüchtigen Weichmacher enthalten, herstellbar durch a) Umsetzung von Hydroxylgruppen-haltigen Polyvinylacetalen mit Polycarbonsäureanhydriden in Schmelze oder in hochsiedenden Lösemitteln, b) zumindest Teilneutralisation der in den gebildeten modifizierten Polyvinylacetalen enthaltenden Carbonsäuregruppen und c) Dispergieren des erhaltenen Salzes der modifizierten Polyvinylacetale in Wasser.

In einer speziellen Ausführungsform der Erfindung ist ein Teil der Carboxylgruppen der mit Polycarbonsäureanhydriden modifizierten Polyvinylacetale mit Epoxidgruppen enthaltenden Verbindungen umgesetzt.

Die zur Herstellung der erfindungsgemäßen Dispersionen verwendeten Polyvinylacetale besitzen vorzugsweise Molgewichte (Mw, berechnet aus GPC - Messungen der als Vorprodukt eingesetzten Polyvinylalkohole) von 20.000 bis 110.000 g/mol, insbesondere von 30.000 bis 60.000 g/mol.

Die eingesetzten Polyvinylacetale enthalten vorzugsweise 10 bis 40 Gew.-%, insbesondere 12 bis 30 Gew.-%, bevorzugt 15 bis 25 Gew.-% nicht umgesetzte Polyvinylalkoholeinheiten und bis zu 10 Gew.-%, vorzugsweise 0,5 bis 5 Gew.-% Polyvinylacetateinheiten.

Die erfindungsgemäß eingesetzten Poylvinylacetale sind insbesondere Polyvinylbutyrale. Es ist ein besonderer Vorteil der Erfindung, daß es sich bei diesen Polyvinylacetalen um handelsüblich zur Verfügung stehende Produkte handelt. Grundsätzlich ist es jedoch auch möglich, Polyvinylacetale einzusetzen, die aus Copolymeren von Vinylacetat hergestellt worden sind.

Als Polycarbonsäureanhydride kommen vorzugsweise solche infrage, die insgesamt nicht mehr als vier Acylgruppen tragen. Es können aliphatische, aromatische oder heterocyclische Verbindungen sein, beispielsweise Bernsteinsäure-, Phthalsäure- oder Pyromellithsäureanhydrid. Besonders bevorzugte Polycarbonsäureanhydride sind Maleinsäure- und Trimellithsäureanhydrid. Je Mol Polycarbonsäureanhydrid soll vorzugsweise nur eine Esterbindung zu den Polyvinylalkoholresten des Polyvinylacetals gebildet werden. Das Molverhältnis von Hydroxylgruppen im eingesetzten Polyvinylacetal zu Anhydridgruppen des eingesetzten Polycarbonsäureanhydrids liegt vorzugsweise zwischen 1:0,008 und 1:0,3, insbesondere zwischen 1:0,01 und 1:0,15, besonders vorteilhaft zwischen 1:0,013 und 1:0,13.

Als hochsiedende Lösemittel für die Umsetzung zwischen Polyvinylacetal und Polycarbonsäureanhydrid kommen solche infrage, die keine mit den Anhydriden reagierenden funktionellen Gruppen enthalten, die außerdem unter den Bedingungen der Dispersionsherstellung mit Wasser zumindest teilweise mischbar sind, und die bei Trocknung von Beschichtungen, die aus den erfindungsgemäßen Dispersionen hergestellt werden, verdampfen. Geeignete Beispiele sind Dimethylformamid, Glykolether und Ester von Glykolethern. Die Lösemittel werden vorzugsweise in Mengen bis zu 100 g, insbesondere bis zu 90 g, besonders vorteilhaft 10 bis 75 g, je 100 g Polyvinylacetal eingesetzt.

Epoxidgruppen enthaltende Verbindungen, die nach einer besonderen Ausführungsform der Erfindung an einen Teil der nicht umgesetzten Säuregruppen der polymeren Polycarbonsäure angelagert werden, sind beispielsweise monofunktionelle Glycidylester oder Glycidylether. Bevorzugt sind Glycidylester von aliphatischenMonocarbonsäuren. Besonders bevorzugt sind Glycidylester längerkettiger, in α-Stellung verzweigter Monocarbonsäuren. Solche Verbindungen sind beispielsweise Glycidylester von Isodecansäuren, die unter der Bezeichnung ®Cardura E 10 im Handel sind.

Zur Neutralisation der freien Carboxylgruppen können alle einwertigen organischen oder anorganischen Basen eingesetzt werden. Besonders geeignet sind Ammoniak und Amine, vorzugsweise Hydroxyalkylamine, die gegebenenfalls Alkyl- oder Aryl-substituiert sein können.

Gegenstand der vorliegenden Erfindung ist auch ein Verfahren zur Herstellung von wäßrigen Dispersionen von Polyvinylacetalen, die keine Emulgatoren, keine leichtflüchtigen organischen Lösemittel und keine nichtflüchtigen Weichmacher enthalten, durch a) Umsetzung von Hydroxylgruppen-haltigen Polyvinylacetalen mit Polycarbonsäureanhydriden in Schmelze oder in hochsiedenden Lösemitteln, b) zumindest Teilneutralisation der in den gebildeten modifizierten Polyvinylacetalen enthaltenen Carbonsäuregruppen und c) Dispergieren des erhaltenen Salzes der modifizierten Polyvinylacetale in Wasser.

In einer besonders vorteilhaften Ausführungsform der Erfindung wird das im Schritt a) entstandene, Carbonsäuregruppen enthaltende Polyvinylacetal oder dessen Umsetzungsprodukt mit Epoxidgruppen enthaltenden Verbindungen vor, während oder nach dem Neutralisationsschritt b) mit einem niedrigsiedenden wasserlöslichen Hilfslösemittel verdünnt, das von dem Lösemittel verschieden ist, in dem die Umsetzung von Polyvinylacetal und Säureanhydrid gegebenenfalls durchgeführt worden ist. Geeignete niedrigsiedende Lösemittel sind beispielsweise Aceton, Methanol, Isopropanol, vorzugsweise Ethanol. Das Lösemittel wird nach Herstellung der wäßrigen Dispersion wieder abdestilliert.

Die Umsetzung zwischen Polyvinylacetal und Carbonsäureanhydrid wird vorzugsweise unter Bedingungen durchgeführt, unter denen im wesentlichen nur Anhydridringe, nicht aber freie Carbonsäuregruppen mit den Hydroxylgruppen im Polymeren reagieren. Es ist vorteilhaft, das Polyvinylacetal in der oben angegebenen Menge mit einem hochsiedenden Lösemittel, vorzugsweise mit Estern von Glykolethern, insbesondere mit Diethylenglykoldialkylethern oder Dipropylenglykoldialkylestern, besonders bevorzugt deren Dimethylestern, zu mischen, um die Viskosität des Reaktionsgutes zu erniedrigen.

Die Anlagerung des Polycarbonsäureanhydrids an das Polyvinylacetal findet vorzugsweise bei Temperaturen von 0 bis 155 °C, insbesondere 50 bis 150 °C, besonders bevorzugt von 120 bis 145 °C statt. Die Umsetzung läuft im besonders bevorzugten Temperaturbereich in weniger als zwei Stunden nahezu quantitativ ab. Unter quantitativ ist zu verstehen, daß nur eine der Carboxylfunktionen der Anhydridgruppen an das Polymere gebunden wird, und daß die Säurezahl des Endprodukts am Ende der Reaktionszeit dem berechneten Wert entspricht. Wenn die Umsetzung bei tieferen Temperaturen, beispielsweise zwischen 50 und 100 °C durchgeführt wird, wird die Reaktionszeit verlängert, damit die Reaktion quantitativ ablaufen kann.

Die optionale Anlagerung von Epoxidgruppen enthaltenden Verbindungen an einen Teil der Carbonsäuregruppen der im Schritt a) mit Polycarbonsäureanhydriden modifizierten Polyvinylacetalen findet vor dem Neutralisationsschritt b) vorzugsweise bei Temperaturen von 100 bis 155 °C, insbesondere von 110 bis 150, besonders bevorzugt von 120 bis 145 °C statt. Die Temperatur wird vorzugsweise beibehalten, bis die Epoxidgruppen in der Reaktionsmischung annähernd verbraucht sind. Die Reaktionszeit liegt unter den angegebenen Bedingungen im allgemeinen zwischen 60 und 120 Minuten, wobei die Reaktion um so länger dauert, je niedriger die Temperatur ist.

Die Neutralisation des Säuregruppen enthaltenden modifizierten Polyvinylacetals wird erfindungsgemäß vorzugsweise in der Weise durchgeführt, daß die stöchiometrisch berechnete Menge an Base bei 60 bis 120 °C, insbesondere bei 70 bis 100 °C in die Polymerschmelze oder -lösung eingerührt wird. Die Neutralisationstemperatur wird so gewählt, daß die Reaktionsmasse einwandfrei gerührt werden kann. Besonders günstig ist eine Verfahrensweise, bei der die Base entweder in einem niedrigsiedenden wassermischbaren Hilfslösemittel, beispielsweise einem Alkohol oder Keton, gelöst oder gleichzeitig mit einem solchen der Polymerschmelze oder -lösung zugesetzt wird, weil dadurch die homogene Verteilung der Base und die nachträgliche Zugabe und Verteilung des Wassers erleichtert werden. Die verwendete Menge des erfindungsgemäßen organischen Hilfslösemittels liegt zwischen 20 und 65 Gew.-%, vorzugsweise 25 und 60 Gew.-%, bezogen auf das eingesetzte Polyvinylacetal.

Das Dispergieren c) des Salzes der modifizierten Polyvinylacetale erfolgt nach dem erfindungsgemäßen Verfahren durch Einrühren von Wasser vorzugsweise bei Temperaturen von 50 bis 100 °C, insbesondere 55 bis 95 °C, besonders bevorzugt 60 bis 91 °C. Die Zugabe des Wassers bei Temperaturen über 100 °C, beispielsweise bis 130 °C, vorzugsweise bis 120 °C unter Druck, um ein Verdampfen des Wassers und der Lösemittel zu verhindern, ist ebenfalls möglich. Die Menge des zuzugebenden Wassers soll vorzugsweise 300 bis 600 ml, insbesondere 330 bis 550 ml pro 100 g Polyvinylbutyral betragen. Die Geschwindigkeit, mit der während der Dispergierung des neutralisierten Polymeren in Wasser gerührt wird, sollte bei 75 bis 300, vorzugsweise bei 100 bis 250 U/Minute liegen. Höhere als die angegebenen Umdrehungszahlen des Rührers sind zur Herstellung der Dispersionen nicht erforderlich.

Schließlich wird das bei der Neutralisation gegebenenfalls zugegebene Hilfslösemittel unter vermindertem Druck, beispielsweise bei 50 bis 300 mbar, vorzugsweise bei 50 bis 150 mbar, vollständig abdestilliert. Es ist ebenfalls möglich, unter den angegebenen Bedingungen einen Teil des zugesetzten Wassers abzudestillieren, um den Feststoffgehalt der Dispersionen zu erhöhen.

Die erfindungsgemäßen wäßrigen Dispersionen haben vorzugsweise Feststoffgehalte von 18 bis 40 Gew.-%, insbesondere von 20 bis 35 Gew.-%, besonders bevorzugt von 23 bis 30 Gew.-%. Sie sind niedrigviskos, feindispers und setzen nicht ab.

Die dispergierten Polymerpartikel besitzen vorzugsweise Durchmesser < 200 nm, insbesondere <160 nm, besonders bevorzugt 30 bis 120 nm (Gewichtsmittel, gemessen durch Photonenkorrelationsspektroskopie).

Die erfindungsgemäßen Dispersionen sind frei von niedrigsiedenden, organischen Lösemitteln, sie können aber bis zu 10 Gew.-%, vorzugsweise < 8 Gew.-%, insbesondere < 6 Gew.-%, der hochsiedenden Lösemittel enthalten.

Aufstriche aus diesen Dispersionen trocknen zu glatten, festen Beschichtungen mit sehr guter Wasserfestigkeit und Härte.

Gegenstand der Erfindung ist auch die Verwendung der wäßrigen Dispersionen von Polyvinylacetalen als Beschichtungsmittel für Papier und Textilien sowie als Bindemittel für Lacke und Farben.

Die folgenden Beispiele beschreiben die Herstellung der erfindungsgemäßen Dispersionen und deren Eigenschaften. Die in den Beispielen angegebenen Teile und Prozente beziehen sich auf das Gewicht, soweit nicht anders vermerkt.

### Beispiel 1

150 g eines Polyvinylbutyrals mit einem mittleren Molgewicht (Mw) von 54.500 und einem Rest-Polyvinylalkoholgehalt von 19,5 % wurden mit 64,5 g Diethylenglykoldimethylether gemischt und bei 125 bis 134 °C mit 8,1 g Trimellithsäureanhydrid 2 Stunden zur Reaktion gebracht. Nach Abkühlung auf 95 °C wurde ein Gemisch von 45 ml 25%iger wäßriger Ammoniaklösung und 65 ml Ethanol zugegeben. Anschließend wurden unter intensivem Rühren 505 ml Wasser zugegeben, wobei die Temperatur bis auf 60 °C fiel. Aus der gebildeten Dispersion wurde das Ethanol durch Destillation bei 50 °C und 100 mbar restlos entfernt.

Das Endprodukt war eine Dispersion mit folgenden Eigenschaften:

| | |
|---|---|
| Feststoffgehalt: | 28 % |
| pH-Wert: | 6,6 |
| Viskosität (n. Brookfield): | 70 mPa·s |
| Partikelgröße (Gewichtsmittel): | 146 nm |

Die Dispersion setzte nach Lagerung über mehrere Monate nicht ab. Dünne Schichten der Dispersion gaben völlig klare, feste und biegsame Filme.

### Beispiel 2

75 g eines Polyvinylbutyrals mit einem mittleren Molgewicht (Mw) von 54.500 und einem Rest-Polyvinylalkoholgehalt von 19,5 % wurden mit 53 g Diethylenglykoldimethylether unter Erwärmen auf 125 °C gemischt und bei 130 bis 135 °C mit 4,5 g Trimellithsäureanhydrid zwei Stunden zur Reaktion gebracht. Nach Abkühlung auf 100 °C wurden 3 g Dimethylaminoethanol zugesetzt. Abschließend wurden 185 ml Wasser bei 90 °C in die neutralisierte polymere Carbonsäure eingerührt.

Die Dispersion hatte folgende Eigenschaften:

| | |
|---|---|
| Feststoffgehalt: | 25,5 % |
| pH-Wert: | 7,2 |
| Viskosität (n. Brookfield): | 130 mPa·s |
| Partikelgröße (Gewichtsmittel): | 165 nm |

### Beispiel 3

75 g eines Polyvinylbutyrals mit einem mittleren Molgewicht (Mw) von 54.500 und einem Rest-Polyvinylalkoholgehalt von 19,5 % wurden mit 53 g Diethylenglykoldimethylether unter Erwärmen auf 125 °C gemischt und bei 130 bis 135 °C mit 2,25 g Trimellithsäureanhydrid zwei Stunden zur Reaktion gebracht. Nach Abkühlung auf 100 °C wurden 1,5 g Dimethylaminoethanol zugesetzt. Abschließend wurden 180 ml Wasser bei 90 °C in die neutralisierte polymere Carbonsäure eingerührt.

Die Dispersion hatte folgende Eigenschaften:

| | |
|---|---|
| Feststoffgehalt: | 25,4 % |
| pH-Wert: | 7,0 |
| Viskosität (n. Brookfield): | 100 mPa·s |
| Partikelgröße (Gewichtsmittel): | 180 nm |

### Beispiel 4

75 g eines Polyvinylbutyrals mit einem mittleren Molgewicht (Mw) von 54.500 und einem Rest-Polyvinylalkoholgehalt von 19,5 % wurde mit 41 g Diethylenglykoldimethylether unter Erwärmen auf 125 °C gemischt und bei 125 bis 134 °C mit 4,5 g Trimellithsäureanhydrid 4 Stunden zur Reaktion gebracht. Danach wurden 12,5 g des Glycidylesters einer in α-Stellung verzweigten Monocarbonsäure (Cardura E 10) zugegeben und 1,5 Stunden lang eine Temperatur von 129 bis 134 °C eingehalten. Nach dieser Zeit waren in der Reaktionsmasse keine Epoxidgruppen mehr analytisch nachweisbar. Nach Abkühlung auf 100 °C wurden 3,3 g Dimethylethanolamin zugegeben. Anschließend wurden 250 ml Wasser in die neutralisierte polymere Carbonsäure eingerührt, wobei die Temperatur kontinuierlich bis auf 85 °C gesenkt wurde.

Die gebildete Dispersion hatte folgende Eigenschaften:

| | |
|---|---|
| Feststoffgehalt: | 24,7 % |
| pH-Wert: | 7,5 |
| Viskosität (n. Brookfield): | 350 mPa·s |
| Partikelgröße (Gewichtsmittel): | 159 nm |

Die Dispersion setzte auch nach mehrere Monate dauernder Lagerung nicht ab.
Dünne Schichten dieser Dispersion gaben völlig klare, feste und biegsame Filme.

### Beispiel 5

150 g eines Polyvinylbutyrals mit einem mittleren Molgewicht (Mw) von 54.500 und einem Rest-Polyvinylalkoholgehalt von 19,5 % wurde mit 89 g Diethylenglykoldimethylether unter Erwärmen auf 125 °C gemischt und bei 125 bis 135 °C mit 8,1 g Trimellithsäureanhydrid 2 Stunden zur Reaktion gebracht. Danach wurden 24,6 g des Glycidylesters einer in α-Stellung verzweigten Monocarbonsäure (Cardura E 10) zugegeben und 1,5 Stunden lang eine Temperatur von 131 bis 135 °C eingehalten. Nach dieser Zeit waren in der Reaktionsmasse keine Epoxidgruppen mehr analytisch nachweisbar. Nach Abkühlung auf 100 °C wurde eine Lösung von 7,25 g Dimethylaminoethanol in 92 ml Ethanol zugegeben. Anschließend wurden 770 ml Wasser in die neutralisierte polymere Carbonsäure eingerührt, wobei die Temperatur kontinuierlich bis auf 70 °C gesenkt wurde. Durch Destillation unter den in Beispiel 1 angegebenen Bedingungen wurden Ethanol und untergeordnete Mengen des Wassers abdestilliert.

Die gebildete Dispersion hatte folgende Eigenschaften:

| | |
|---|---|
| Feststoffgehalt: | 24,7 % |
| pH-Wert: | 9,15 |
| Viskosität (n. Brookfield): | 16 mPa·s |

Die Dispersion setzte auch nach Lagerung über mehrere Monate nicht ab. Dünne Schichten dieser Dispersion gaben völlig klare, feste und biegsame Filme.

### Beispiel 6

100 g eines Polyvinylbutyrals mit einem mittleren Molgewicht (Mw) von 42.500 und einem Rest-Polyvinylalkoholgehalt von 19,5 % wurde mit 43 g Diethylenglykoldimethylether unter Erwärmen auf 125 °C gemischt und bei 132 bis 135 °C mit 5,53 g Trimellithsäureanhydrid 2 Stunden zur Reaktion gebracht. Danach wurden 16,1 g des Glycidylesters einer in α-Stellung verzweigten Monocarbonsäure (Cardura E 10) zugegeben und 1,5 Stunden lang eine Temperatur von 129 bis 135 °C eingehalten. Nach dieser Zeit waren in der Reaktionsmasse keine Epoxidgruppen mehr analytisch nachweisbar. Nach Abkühlung auf 99 °C wurde eine Mischung von 55 ml Ethanol und 36,5 g Ammoniak (25%ig in Wasser) unter Rühren zu der Reaktionsmasse gegeben. Anschließend wurden 500 ml Wasser in die neutralisierte polymere Carbonsäure eingerührt, wobei die Temperatur kontinuierlich bis auf 63 °C gesenkt wurde. Aus der gebildeten Dispersion wurde durch Destillation unter den in Beispiel 1 angegebenen Bedingungen Ethanol und ein Teil des Wassers abdestilliert .

Die so hergestellte Dispersion hatte folgende Eigenschaften:

| | |
|---|---|
| Feststoffgehalt: | 27,4 % |
| pH-Wert: | 7,1 |
| Viskosität (n. Brookfield): | 26 mPa·s |
| Partikelgröße (Gewichtsmittel): | 112 nm |

Die Dispersion setzte auch nach dauernder Lagerung über mehrere Monate nicht ab.

### Beispiel 7

100 g eines Polyvinylbutyrals mit einem mittleren Molgewicht (Mw) von 42.500 und einem Rest-Polyvinylalkoholgehalt von 19,5 % wurde mit 36 g Dipropylenglykoldimethylether unter Erwärmen auf 125 °C gemischt und bei 137 bis 145 °C mit 4,65 g Trimellithsäureanhydrid 2 Stunden zur Reaktion gebracht. Danach wurden 7,02 g des Glycidylesters einer in α-Stellung verzweigten Monocarbonsäure (Cardura E 10) zugegeben und 1,5 Stunden lang eine Temperatur von 137 bis 145 °C eingehalten. Nach dieser Zeit waren in der Reaktionsmasse keine Epoxidgruppen mehr analytisch nachweisbar. Nach Abkühlung auf 58 °C wurde eine Mischung von 31 ml Ethanol und 3,8 g Dimethylaminoethanol unter Rühren zu der Reaktionsmasse gegeben. Anschließend wurden bei 81 bis 78 °C 246 ml Wasser in die neutralisierte polymere Carbonsäure eingerührt. Aus der gebildeten Dispersion wurde durch Destillation unter den in Beispiel 1 angegebenen Bedingungen Ethanol und ein Teil des Wassers abdestilliert

Die so hergestellte Dispersion hatte folgende Eigenschaften:

| | |
|---|---|
| Feststoffgehalt: | 24,8 % |
| pH-Wert: | 7,82 |
| Viskosität (n. Brookfield): | 86 mPa·s |
| Partikelgröße (Gewichtsmittel): | 86 nm |

Die Dispersion setzte nicht ab.

### Beispiel 8

100 g eines Polyvinylbutyrals mit einem mittleren Molgewicht (Mw) von 42.500 und einem Rest-Polyvinylalkoholgehalt von 19,5 % wurde mit 36 g Dipropylenglykoldimethylether unter Erwärmen auf 125 °C gemischt und bei 137 bis 145 °C mit 4,65 g Trimellithsäureanhydrid 2 Stunden zur Reaktion gebracht. Danach wurden 7,02 g des Glycidylesters einer in α-Stellung verzweigten Monocarbonsäure (Cardura E 10) zugegeben und 1,5 Stunden lang eine Temperatur von 137 bis 145 °C eingehalten. Nach dieser Zeit waren in der Reaktionsmasse keine Epoxidgruppen mehr analytisch nachweisbar. Nach Abkühlung auf 84 °C wurde eine Mischung von 38 ml Ethanol und 4 g Dimethylaminoethanol unter Rühren zu der Reaktionsmasse gegeben. Anschließend wurden 246 ml Wasser in die neutralisierte polymere Carbonsäure eingerührt, wobei die Temperatur kontinuierlich bis auf 74 °C gesenkt wurde. Aus der gebildeten Dispersion wurde durch Destillation unter den in Beispiel 1 angegebenen Bedingungen Ethanol und ein Teil des Wassers abdestilliert .

Die so hergestellteDispersionen hatte folgende Eigenschaften:

| | |
|---|---|
| Feststoffgehalt: | 30,0 % |
| pH-Wert: | 7,55 |
| Viskosität (n. Brookfield): | 91 mPa·s |
| Partikelgröße (Gewichtsmittel): | 112 nm |

Die Dispersion setzte nach Lagerung nicht ab.

## Patentansprüche

1. Wäßrige Dispersionen von Carboxylgruppen-haltigen Polyvinylacetalen, die keine Emulgatoren, keine leichtflüchtigen organischen Lösemittel und keine nichtflüchtigen Weichmacher enthalten, herstellbar durch a) Umsetzung von Hydroxylgruppen-haltigen Polyvinylacetalen mit Polycarbonsäureanhydriden in Schmelze oder in hochsiedenden Lösemitteln, b) zumindest Teilneutralisation der in den gebildeten modifizierten Polyvinylacetalen enthaltenen Carbonsäuregruppen und c) Dispergieren des erhaltenen Salzes der modifizierten Polyvinylacetale in Wasser.

2. Wäßrige Dispersionen nach Anspruch 1, dadurch gekennzeichnet, daß ein Teil der Carbonsäuregruppen der mit Polycarbonsäurenanyhdriden modifizierten Polyvinylacetale mit Epoxidgruppen enthaltenden Verbindungen umgesetzt ist.

3. Wäßrige Dispersionen nach Anspruch 1, dadurch gekennzeichnet, daß die eingesetzten Polyvinylacetale 10 bis 40 Gew.-%Vinylalkohol-Monomereinheiten enthalten.

4. Wäßrige Dispersionen nach Anspruch 1, dadurch gekennzeichnet, daß die Polycarbonsäureanhydride nicht mehr als vier Acylgruppen tragen.

5. Wäßrige Dispersionen nach Anspruch 1, dadurch gekennzeichnet, daß das Molverhältnis von Hydroxylgruppen im eingesetzten Polyvinylacetal zu Anhydridgruppen des eingesetzten Polycarbonsäureanhydrids zwischen 1:0,008 und 1:0,3 beträgt.

6. Wäßrige Dispersionen nach Anspruch 1, dadurch gekennzeichnet, daß die hochsiedenden Lösemittel aus der Gruppe Dimethylformamid, Glykolether und Ester von Glykolethern ausgewählt sind.

7. Wäßrige Dispersionen nach Anspruch 1, dadurch gekennzeichnet, daß die Epoxid enthaltenden Verbindungen monofunktionelle Glycidylester von aliphatischen Carbonsäuren sind.

8. Verfahren zur Herstellung von wäßrigen Dispersionen von Polyvinylacetalen, die keine Emulgatoren, keine leichtflüchtigen organischen Lösemittel und keine nichtflüchtigen Weichmacher enthalten, durch a) Umsetzung von Hydroxylgruppen-haltigen Polyvinylacetalen mit Polycarbonsäureanhydriden in Schmelze oder in hochsiedenden Lösemitteln, b) zumindest Teilneutralisation der in den gebildeten modifizierten Polyvinylacetalen enthaltenen Carbonsäuregruppen und c) Dispergieren des erhaltenen Salzes der modifizierten Polyvinylacetale in Wasser.

9. Verfahren nach Anspruch 8, dadurch gekennzeichnet, daß die Umsetzung der Polyvinylacetale mit den Polycarbonsäureanhydriden bei einer Temperatur von 50 bis 150 °C stattfindet.

10. Verfahren nach Anspruch 8, dadurch gekennzeichnet, daß ein Teil der Carbonsäuregruppen der im Schritt a) mit Polycarbonsäureanhydriden modifizierten Polyvinylacetale vor der Neutralisations b) bei einer Temperatur von 100 bis 155 °C mit Epoxidgruppen enthaltenden Verbindungen umgesetzt wird.

11. Verfahren nach Anspruch 8, dadurch gekennzeichnet, daß das im Schritt a) entstandene Carbonsäuregruppen enthaltende Polyvinylacetal vor, während oder nach der Neutralisation b) mit einem niedrigsiedenden wasserlöslichen Lösemittel versetzt wird, und das Lösemittel nach dem Dispergieren c) wieder abdestilliert wird.

12. Verwendung von wäßrigen Dispersionen nach Anspruch 1 als Beschichtungsmittel für Papier und Textilien.

13. Verwendung von wäßrigen Dispersionen nach Anspruch 1 als Bindemittel für Farben und Lacke.
